# EUROPÄISCHE PATENTANMELDUNG

(11) **EP 3 291 423 A1**
(43) Veröffentlichungstag der Anmeldung: **07.03.2018**
(21) Anmeldenummer: 16186122.4
(22) Anmeldetag: 29.08.2016
(51) Int. Cl.: H02K 9/22, H02K 9/28, H02K 9/14

(54) **SCHLEIFRINGANORDNUNG**

(71) Anmelder: Siemens Aktiengesellschaft, 80333 München (DE)
(72) Erfinder: Hutzler, Mathias, 94060 Pocking (DE); Pfefferkorn, Helmut, 94086 Bad Griesbach (DE); Putz, Walter, 94060 Pocking (DE)

(57) **Zusammenfassung**

Die Erfindung betrifft eine Schleifringanordnung (19) für eine dynamoelektrische Maschine (1) mit
- einem Schleifringkörper (11), der mit einer Welle (5) eines Schleifringläufers (3) drehfest verbunden ist, und dessen Kontaktscheiben mit einer Wicklung des Schleifringläufers (3) elektrisch leitend verbunden sind,
- einer Anordnung mit stationären Bürsten (12), die mit dazu korrespondierenden Kontaktstellen des Schleifringkörpers (11) elektrisch leitend verbindbar sind,
- einem Schleifringgehäuse (13) mit einem Trägerelement (22), das sich axial an den Schleifringkörper (11) anschließt und oberflächenvergrößernde Strukturen aufweist.

## Beschreibung

Die Erfindung betrifft eine Schleifringanordnung für eine dynamoelektrische Maschine.

Bei dynamoelektrischen Maschinen mit Schleifringläufern, sind die elektrischen Anschlussleitungen der Wicklungen dieses Läufers über eine Schleifringanordnung nach außen geführt. Die Schleifringe der Schleifringanordnungen für mittlere und große dynamoelektrische Maschinen im Bereich von mehreren Megawatt müssen dabei gekühlt werden. Ohne eine ausreichende Kühlung der Schleifring steigt u.a. der Verschleiß an den Bürsten der Schleifringanordnung stark an.

Um insbesondere bei geschlossenem Gehäuse der Schleifringanordnung eine ausreichende Kühlung zu gewährleisten, sind z.B. großvolumige und damit kostenintensive Ausführungen der Schleifringanordnung notwendig. Geschlossene Gehäuse, insbesondere der Schleifringanordnung, aber auch der dynamoelektrischen Maschinen sind insbesondere dann erforderlich, wenn diese elektrischen Betriebsmittel in korrosiven, chemisch aggressiven oder explosiven Umgebungsbedingungen wie sie bei der chemischen oder hüttentechnischen Industrie, der Zementindustrie oder bei Offshore-Windkraftanlagen vorliegen.

Um nun insbesondere eine geschlossene Bauart (IP54) zu realisieren, sind die Schleifringanordnungen, also im Wesentlichen die Schleifringe mit dem Bürstenapparat, im Inneren der dynamoelektrischen Maschine angeordnet und durch eine Trennwand von Stator- und Läuferwicklung getrennt. Die Schleifringe und die Bürsten werden durch Einbindung in den Kühlkreislauf des jeweiligen Kühlers dieser dynamoelektrischen Maschine mit gekühlt. Dadurch gelingt zwar eine gute und ausreichende Kühlung der Schleifringe und Bürsten, jedoch besteht die Gefahr, dass sich Laufe der Zeit durch unvermeidlichen Bürstenabrieb, der sich an Teilen der Stator- und/oder Läuferwicklung absetzt die jeweilige Isolation der Wicklung durch Überschläge beschädigt oder zerstört wird, was zum Ausfall der dynamoelektrischen Maschine führt.

Aus der DE 10 2010 001 437 A1 ist eine dynamoelektrische Maschine mit einem Schleifringläufer und geschlossener Schleifringanordnung bekannt, bei der die Schleifringanordnung einen Radiallüfter aufweist und der Kühlkreislauf der Schleifringanordnung an den Sekundärkühler der dynamoelektrischen Maschine thermisch gekoppelt ist.

Nachteilig dabei ist unter anderem, dass das Wärmekonzept der gesamten Anordnung von Schleifringanordnung und dynamoelektrischer Maschine auf diese Anordnung ausgerichtet sein muss.

Ausgehend davon liegt der Erfindung die Aufgabe zugrunde, eine einfache und effiziente Kühlung einer Schleifringanordnung zu schaffen, die auch für große und mittlere dynamoelektrische Maschinen im Leistungsbereich von einigen Megawatt einsetzbar ist.

Die Lösung der gestellten Aufgabe gelingt durch eine Schleifringanordnung für eine dynamoelektrische Maschine mit
- einem Schleifringkörper, der mit einer Welle eines Schleifringläufers drehfest verbunden ist, und dessen Kontaktscheiben mit einer Wicklung des Schleifringläufers elektrisch leitend verbunden sind,
- einer Anordnung mit stationären Bürsten, die mit dazu korrespondierenden Kontaktstellen des Schleifringkörpers elektrisch leitend verbindbar sind,
- einem Schleifringgehäuse mit einem Trägerelement, das sich axial an den Schleifringkörper anschließt und oberflächenvergrößernde Strukturen aufweist.

Erfindungsgemäß wird nunmehr ein Teil des Schleifringgehäuses als Trägerelement ausgeführt, das den Innenraum der Schleifringanordnung vom Außenraum strömungstechnisch abschottet, jedoch eine Wärmekonvektion über dieses Trägerelement nach außen hinweg gestattet. Die Wärmekonvektion wird dabei wesentlich verbessert, wenn sowohl auf der Innenseite, also der Schleifringanordnung zugewandten Seite des Trägerelements, als auch auf der Außenseite lüfterähnliche Strukturen vorhanden sind.

Dabei wird nunmehr im Betrieb der dynamoelektrischen Maschine der Schleifringläufer in Rotation versetzt, was gleichzeitig den Schleifringkörper bewegt, eine Leistung über die Bürsten abgegriffen oder zugeführt werden kann. Gleichzeitig generieren über das nunmehr mit rotierende Trägerelement oder einen eigenen Antrieb des Trägerelements die oberflächenvergrößernden Strukturen, also lüfterähnliche Elemente, sowohl einen Innenluftkreislauf innerhalb der Schleifringanordnung als auch eine Außenluftströmung.

Das Trägerelement und die Lüfterflügel, die die oberflächenvergrößernden Strukturen bilden, weisen dabei vorzugsweise gut wärmeleitfähiges Material auf, was einen vergleichsweise hohen Wärmeübergangskoeffizienten gewährleistet. Der Rest des Schleifringgehäuses außer dem Trägerelement kann demnach auch ein weniger gut wärmeleitfähiges Material wie Stahl sein.

Ebenso kann der Rest des Schleifringgehäuses ohne weitere Kühlrippen ausgeführt sein.

Die mechanischen Übergangsstellen oder auch Schnittstellen zwischen dem Trägerelement und dem stationären Gehäuseteile des Schleifringgehäuses werden durch dementsprechende Abdichtungen, wie z.B. Labyrinthdichtungen abgedichtet, um die erforderlichen Schutzarten einzuhalten.

In einer weiteren Ausführung weist die Welle des Schleifringläufers einen Axialkühler auf der Innenseite der Schleifringanordnung und/oder einen Axiallüfter auf der Außenseite auf. Eine wärmetechnische Verbindung zwischen dem Inneren der Schleifringanordnung und dem Äußeren wird durch einen Wärmetauscher gebildet, der aus Wärmeleitblechen aufgebaut ist und dessen Basis ebenfalls das Trägerelement bildet. Dabei kann das Trägerelement stationär oder mitrotierend ausgeführt sein.

Der Innenlüfter erzeugt einen Luftstrom, der über das innere Wärmeleitblech geführt wird, wobei der Außenlüfter einen Luftstrom über die äußeren Wärmeleitbleche erzeugt. Eine zusätzliche Rotation des Trägerelements und damit der Wärmeleitbleche kann zu einer zusätzliche Anströmung der Wärmeleitbleche im Bereich des Trägerelements führen und die Kühleffizienz zusätzlich steigern.

Die weiteren Schnittstellen zwischen Schleifringgehäuse und Welle werden dabei ebenfalls mit gängigen Methoden abgedichtet.

Als Alternative zu den oben beschriebenen Ausführungen, die im Wesentlichen eine Eigenbelüftung darstellen, kann der Kühlluftstrom sowohl in der Schleifringanordnung als auch außerhalb durch einen eigenen Antrieb, also durch eine Fremdbelüftung generiert werden. Es gibt eine eigene Lüfterwelle, die in die Schleifringanordnung der Welle ragt und in axialer Verlängerung der Welle angeordnet ist.

Auch bei dieser Fremdbelüftung sind zwei Ausführungen vorstellbar. Es gibt ein Trägerelement, das die Oberflächenstrukturen wie lüfterflügel-ähnliche Ausgestaltungen vom Trägerelement ausgehend sowohl in die Schleifringanordnung als auch vom Trägerelement ausgehend weg von der Schleifringanordnung aufweisen. Es gibt somit einen über das Trägerelement starr gekoppelten Innen- und Außenlüfter mit eigenem Antrieb außerhalb der Schleifringanordnung.

Auch hier sind wiederum wie oben beschrieben, zwei Axiallüfter auf der Lüfterwelle möglich, die einen Luftstrom sowohl innerhalb der Schleifringanordnung als auch außerhalb davon auf eine Wärmetauscherfläche mit Wärmeleitblechen lenken, die entweder stationär oder mitrotierend ausgeführt sind.

Das Trägerelement kann dabei als eine Trägerscheibe oder als Trägerblech ausgeführt sein.

Die Erfindung sowie weitere vorteilhafte Ausgestaltungen der Erfindung werden anhand schematisch dargestellter Ausführungsbeispiele näher erläutert. Dabei zeigen:
- FIG 1: Längsschnitt einer dynamoelektrischen Maschine,
- FIG 2 bis FIG 5: Ausführungsbeispiele der Kühlung der Schleifringanordnung.

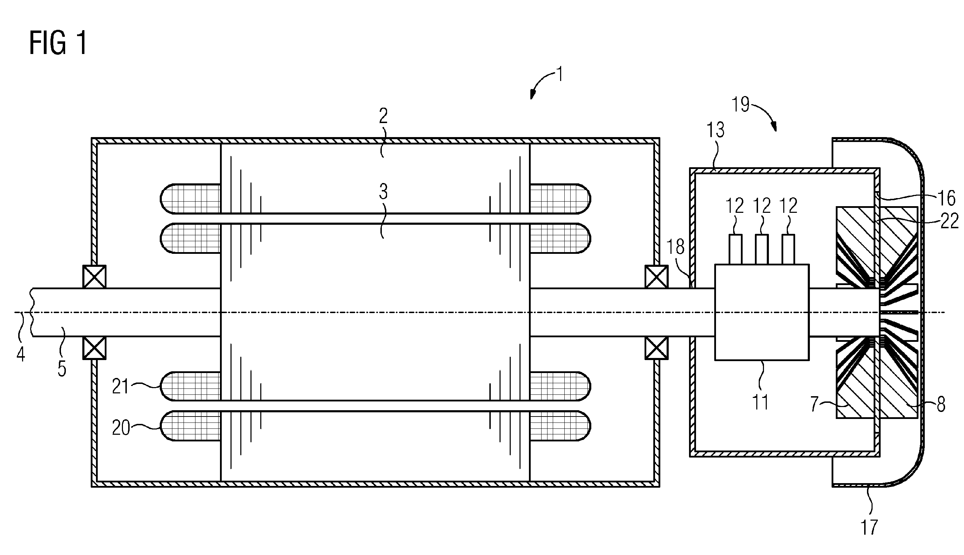

FIG 1 zeigt in einem prinzipiell dargestellten Längsschnitt eine dynamoelektrische Maschine 1 mit einer Schleifringanordnung 19. Die dynamoelektrische Maschine 1 weist einen geblechten Stator 2 und einen geblechten Rotor 3 auf. Der geblechte Rotor 3 ist drehfest mit einer Welle 5 verbunden, die sich um eine Achse 4 dreht. In axialer Verlängerung der Welle 5 ist eine Schleifringringanordnung 19 vorgesehen, die einen mit der Welle 5 drehfest verbundenen Schleifringkörper 11 aufweist, der mit einer Wicklung 21 des Rotors 3 elektrisch leitend in Verbindung steht.

Die Wicklung 21 des Rotors 3 ist dreiphasig ausgeführt, so dass jede Phase mit einer Schleifringscheibe der Schleifringanordnung 11 elektrisch leitend in Verbindung steht. Jede Schleifringscheibe wird dabei zumindest von einer Bürste 12 elektrisch kontaktiert und elektrische Leistung zu- bzw. abgeführt. Die Schleifringscheiben sind voneinander und gegen umliegende Gehäuseteile elektrisch isoliert.

Die Schleifringanordnung 19 weist ebenso ein Schleifringgehäuse 13 auf, das ein Trägerelement, in diesem Fall ein Trägerblech 22 aufweist, das wiederum durch oberflächen-vergrößernde Strukturen, die in den weiteren Ausführungen näher erläutert werden, mit der Umgebung wärmetechnisch leitend in Verbindung steht. Das Trägerblech 22 ist über Schnittstellen 16 vom stationären Gehäuseteil des Schleifringgehäuses 13 abgekoppelt. Zumindest um einen Teil des Schleifringgehäuses 13 ist optional eine Haube 17 zur Führung einer äußeren Kühlluft angeordnet.

Falls eine Haube 17 vorgesehen ist, weist diese grundsätzlich axial ausgerichtet Öffnungen zumindest im Bereich des Trägerblechs 22 auf, über die ein Luftstrom 15 geführt werden kann.

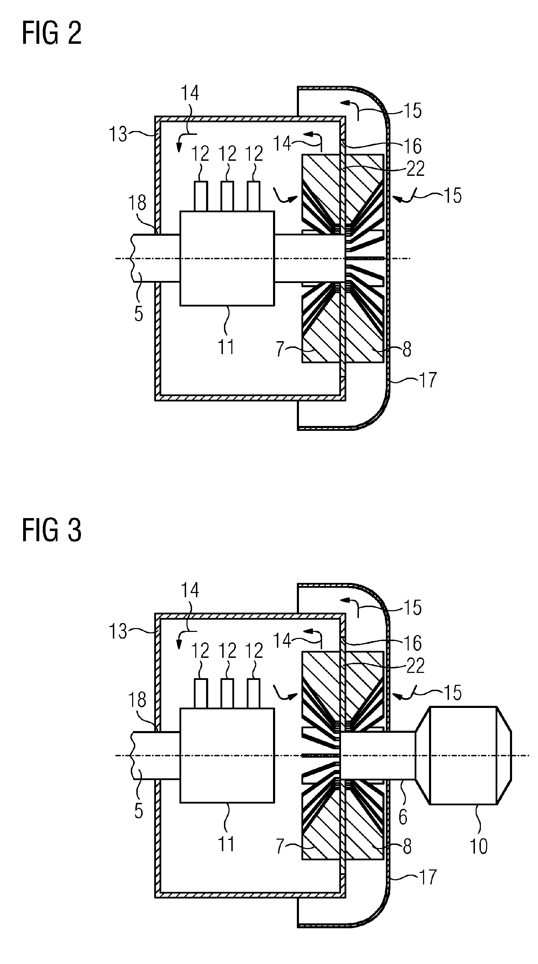

FIG 2 zeigt die Schleifringanordnung 19, wobei über drei Bürsten 12 eine Leistungszufuhr bzw. -abfuhr über den Schleifringkörper 11 und nicht näher dargestellten elektrisch leitenden Verbindungen zur Läuferwicklung 21 besteht. Das Schleifringgehäuse 13 ist über Schnittstellen 18 zur Welle 5 bzw. Schnittstellen 16 zum rotierenden Tragblech 22 abgedichtet. Das Trägerblech 22 ist in dieser Ausführungsform direkt mit der Welle 5 gekoppelt. D.h., eine Umdrehung der Welle 5 führt zu einer Umdrehung des Trägerbleches 22.

Am Trägerblech 22 sind, in den Innenraum weisend, als auch nach außen weisend oberflächenvergrößernde Strukturen in Form von Lüfterflügel vorgesehen, so dass ein Innenlüfter 7 und ein Außenlüfter 8 gebildet werden. Die einzelnen Lüfterflügel verlaufen von der Achse 4 aus gesehen radial nach außen - somit ist der Volumenstrom im Betrieb der dynamoelektrischen Maschine unabhängig von der Drehrichtung. Insbesondere falls die dynamoelektrische Maschine 1 eine bevorzugte Drehrichtung aufweisen sollte, können sowohl die Form der Lüfterflügel und/oder der Neigungswinkel der Lüfterflügel in Bewegungsrichtung strömungsoptimiert, z.B. geneigt ausgeführt sein.

Im Betrieb der dynamoelektrischen Maschine 1 wird nunmehr ein Luftstrom 14 durch einen Innenlüfter 7 als auch ein Luftstrom 15 durch einen Außenlüfter 8 generiert und so eine ausreichende Kühlung der Schleifringanordnung 19, insbesondere der Bürsten 12 und Schleifringkontakte bzw. dieser Schleifringscheiben gewährleistet. Die Kühleffizienz wird durch die Führung der Kühlluft durch die Haube 17 außerhalb der Schleifringanordnung 19 zusätzlich verbessert.

FIG 3 zeigt eine weitere Antriebsmöglichkeit des Trägerblechs 22. Dabei ist die Drehzahl des Lüfters und damit der Lüfterleistung nunmehr unabhängig von der Drehzahl der Welle 5. Dies wird dadurch erreicht, dass das Trägerblech 22 durch einen Fremdbelüftungsmotor 10 angetrieben wird und über eine eigene Lüfterwelle 6 an den Antriebsmotor 10 gekoppelt ist. Dies gewährleistet auch bei vergleichsweise geringer Drehzahl der dynamoelektrischen Maschine 1 die Möglichkeit einer ausreichenden Kühlung der Schleifringanordnung 19, da der Antriebsmotor 10 als Fremdbelüftungsmotor völlig eigenständig in seinem Drehzahlverhalten regelbar ist. Beispielsweise kann durch Signale von Temperatursensoren innerhalb der Schleifringanordnung 19 die Drehzahl des Antriebsmotors 10 angepasst werden. Dies reduziert u.a. die Geräuschemissionen.

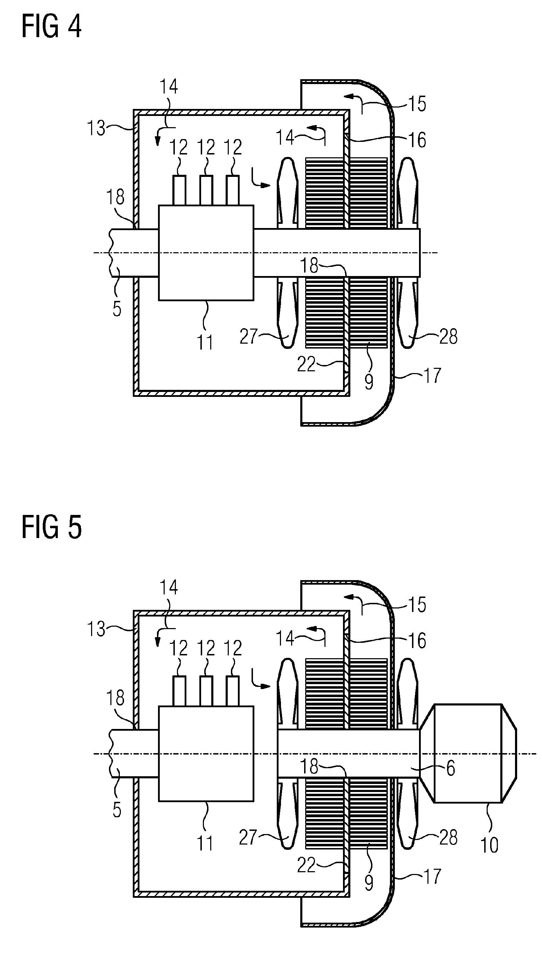

FIG 4 zeigt in axialer Verlängerung der Schleifringanordnung 19 zwei zusätzlich auf der Welle 5 angeordnete Axiallüfter 27 bzw. 28, die nicht direkt am Trägerblech 22 angeordnet sind. Das Trägerblech 22 weist eigene Kühlkörper 9 auf, die sowohl stationär angeordnet sein können als auch mit der Lüfterwelle 6 mitrotierend.

FIG 5 zeigt einen ähnlichen Aufbau wie in FIG 4, nur dass wiederum der Antrieb der beiden Lüfter 27 und 28 als auch optional der des Kühlkörpers 9 über einen Fremdbelüftungsmotor 10 erfolgt. Es sind nunmehr der Kühlkörper 9 als auch die beiden Lüfter sowohl der Innenlüfter 27 als auch der Außenlüfter 28 auf der Lüfterwelle 6 angeordnet.

Die Axiallüfter 27, 28 der FIG 4, 5 können in diesen Ausführungsformen auch aus Kunststoff sein.

Das Trägerblech 22 ist vorzugsweise durch ein gut wärmeleitendes Material, wie z.B. Aluminium ausgebildet, ebenso die oberflächenvergrößernden Strukturen, die flügelähnlich ausgebildet sind. Das bedeutet, dass jedoch die weiteren Wandungen des Schleifringgehäuses 13 nicht zwangsläufig aus Aluminium oder gar einem anderen gut wärmeleitfähigen Material ausgebildet sein müssen. Dafür eignen sich auch andere preisgünstige Bleche oder Abdeckungen.

Zur ergänzenden Kühlung können die weiteren Wandungen des Schleifringgehäuses 13 mit wärmeleitfähigem Material und zusätzlich insbesondere mit axial verlaufenden Kühlrippen ausgebildet sein.

Entscheidend ist, dass im Bereich des Trägerblechs 22 eine ausreichende Kühlung erfolgt, die den Innenraum der Schleifringanordnungen 19 auch bei dynamoelektrischen Maschinen 1 hoher Leistung eine ausreichende Kühlung bereitstellt. Dies ist insbesondere bei Offshore-Windkraftanlagen notwendig, dort insbesondere bei doppelt gespeisten Asynchronmaschinen. Ebenso werden derartige dynamoelektrische Maschinen 1 in der chemischen Industrie oder im Bergbau eingesetzt.

## Patentansprüche

1. Schleifringanordnung (19) für eine dynamoelektrische Maschine (1) mit
- einem Schleifringkörper (11), der mit einer Welle (5) eines Schleifringläufers (3) drehfest verbunden ist, und dessen Kontaktscheiben mit einer Wicklung des Schleifringläufers (3) elektrisch leitend verbunden sind,
- einer Anordnung mit stationären Bürsten (12), die mit dazu korrespondierenden Kontaktstellen des Schleifringkörpers (11) elektrisch leitend verbindbar sind,
- einem Schleifringgehäuse (13) mit einem Trägerelement (22), das sich axial an den Schleifringkörper (11) anschließt und oberflächenvergrößernde Strukturen aufweist.

2. Schleifringanordnung (19) nach Anspruch 1, **dadurch gekennzeichnet , dass** das Trägerelement (22) mit der Welle (5) drehfest verbunden ist.

3. Schleifringanordnung (19) nach Anspruch 2, **dadurch gekennzeichnet , dass** das Trägerelement (22) einen Innenlüfter (7) und einen Außenlüfter (8) aufweist.

4. Schleifringanordnung (19) nach Anspruch 2 oder 3, da- durch **gekennzeichnet,** dass das Trägerelement (22) Kühlrippen aufweist.

5. Schleifringanordnung (19) nach Anspruch 1, **dadurch gekennzeichnet , dass** das Trägerelement (22) mit einer Lüfterwelle (6) eines Fremdbelüftungsmotors (10) drehfest verbunden ist.

6. Schleifringanordnung (19) nach Anspruch 5, **dadurch gekennzeichnet, dass** das Trägerelement (22) einen Innenlüfter (7) und einen Außenlüfter (8) aufweist.

7. Schleifringanordnung (19) nach Anspruch 5 oder 6, **da- durch gekennzeichnet** , dass das Trägerelement (22) Kühlrippen aufweist.

8. Dynamoelektrische Maschine (1) mit einer Schleifringanordnung (19) nach einem der vorhergehenden Ansprüche.

9. Windkraftanlage mit einer dynamoelektrischen Maschine (1) nach Anspruch 8.
